Europäisches Patentamt

European Patent Office

Office européen des brevets

(19)

(11) Numéro de publication : **0 148 700**
**B1**

(12)

# FASCICULE DE BREVET EUROPÉEN

(45) Date de publication du fascicule du brevet :
01.02.89

(51) Int. Cl.⁴ : **G 05 D 23/20**

(21) Numéro de dépôt : **84402724.3**

(22) Date de dépôt : **27.12.84**

(54) Procédé et dispositif de régulation d'une installation de chauffage de locaux comprenant plusieurs générateurs de chauffage.

(30) Priorité : **09.01.84 FR 8400214**

(43) Date de publication de la demande :
**17.07.85 Bulletin 85/29**

(45) Mention de la délivrance du brevet :
**01.02.89 Bulletin 89/05**

(84) Etats contractants désignés :
**AT BE CH DE GB IT LI LU NL SE**

(56) Documents cités :
EP--A-- 0 049 215
EP--A-- 0 056 445
EP--A-- 0 070 471
EP--A-- 0 076 398
EP--A-- 0 089 567
EP--A-- 0 113 262
FR--A-- 2 436 337

(73) Titulaire : **ELECTRICITE DE FRANCE Service National**
**2, rue Louis Murat**
**F-75008 Paris (FR)**

(72) Inventeur : **Pichot, Jacky**
**4, rue Haute-La-Grande Paroisse**
**F-77130 Montereau (FR)**
Inventeur : **Oddou, Jacques**
**18, rue Carnot**
**F-77300 Fontainebleau (FR)**

(74) Mandataire : **Martin, Jean-Jacques et al**
**Cabinet REGIMBEAU 26, Avenue Kléber**
**F-75116 Paris (FR)**

EP 0 148 700 B1

**Description**

La présente invention concerne le domaine du chauffage des locaux.

La présente invention concerne plus précisément un procédé et un dispositif perfectionnés de régulation d'une installation de chauffage de locaux comprenant plusieurs générateurs de chauffage.

De nombreux processus de régulation ont déjà été proposés, toutefois, d'une façon générale, les processus jusqu'ici proposés sont très mal adaptés à la régulation d'une installation comprenant plusieurs générateurs de chauffage.

On a par exemple décrit dans le document EP-A-0 076 398 un procédé de régulation de la température de l'eau d'une installation de chauffage, selon lequel une valeur de consigne de base de la température de l'eau est définie, en fonction des conditions climatiques ou de la température extérieure, sur la base d'une courbe de chauffage préétablie introduite dans le régulateur, et selon lequel de plus l'écart entre la température d'un local de référence et la valeur de consigne est déterminé et utilisé pour définir une grandeur électrique de correction qui est fournie au régulateur pour décaler la courbe de chauffage parallèlement à elle-même. La grandeur de correction est déterminée à des instants discrets. Elle est formée par sommation algébrique d'une part de la valeur momentanée ($V_n$), à un instant considéré, d'un paramètre de correction proportionnel à l'écart entre la température de consigne et la température du local de référence, multiplié par un facteur d'intensité d'influence (a), inférieur à 1, et d'autre part de la valeur momentanée ($V_{n-1}$) déterminée à un instant antérieur.

Le procédé et le dispositif de régulation d'une installation de chauffage conformes à l'invention sont adaptés pour permettre des économies importantes par rapport aux réalisations antérieures.

Un autre but de la présente invention est de proposer un processus de régulation pour installation de chauffage bi ou multiénergie qui respecte automatiquement les priorités de fonctionnement des différents générateurs, et qui notamment tient compte des périodes tarifaires.

Un autre but important de la présente invention est de proposer un processus de régulation selon lequel la consigne de température de départ du fluide de chauffage traversant les générateurs de chauffage, est asservie constamment et automatiquement aux besoins réels des locaux.

Le processus de régulation conforme à l'invention, notamment, intègre les apports gratuits d'énergie et les phénomènes inertiels relatifs aux locaux considérés.

Le procédé de régulation d'une installation de chauffage conforme à la présente invention comprend les étapes connues en soi consistant :

a) à définir une température de base en prenant en compte la température extérieure momentanée, et

b) à décaler la température de base à l'aide d'un signal de correction prenant en compte la température intérieure d'un local.

Le procédé de régulation conforme à la présente invention est caractérisé par le fait qu'il comprend les étapes consistant :

i) à générer en permanence un premier signal représentatif d'une température de base proportionnelle à l'écart existant entre une température de consigne et la température extérieure instantanée,

ii) à générer en permanence un second signal représentatif d'une correction apportée à la température de base, proportionnelle à l'écart existant entre la température de consigne et la température intérieure instantanée des locaux,

iii) à générer périodiquement un troisième signal représentatif d'une correction auxiliaire proportionnelle à l'intégration, sur une période de temps prédéterminée, des écarts existants entre la température de consigne et la température intérieure,

iv) à corriger le facteur de proportionnalité entre la température de base et l'écart existant entre la température de consigne et la température extérieure, sur la base du troisième signal, à la fin de chaque période prédéterminée,

v) à générer en permanence un quatrième signal représentatif d'une température de référence correspondant à une sommation des trois premiers signaux,

vi) à déterminer un cinquième signal dans un régulateur du type proportionnel-intégral sensible à l'écart existant entre la température de référence et la température de départ du fluide chauffé, et

vii) à détecter le passage du cinquième signal par des seuils prédéterminés successifs correspondant à des commandes respectives de mise en service d'une pluralité de générateurs.

Selon une autre caractéristique de l'invention, la correction apportée à la température de base et déterminée sous forme du second signal à l'étape ii) est limitée à un maximum ΔTDmax.

Selon une caractéristique avantageuse de l'invention, l'étape iv) consiste à incrémenter périodiquement la valeur de la température extérieure Tm pour laquelle la température de départ d'eau maximale est imposée afin de maintenir la température de consigne Tc à l'intérieur des locaux, proportionnellement à ladite intégration, sur une période prédéterminée, de l'écart existant entre la température de consigne et la température intérieure aux locaux.

De préférence, la température de consigne est modulée automatiquement en fonction d'une programmation horaire.

EP 0 148 700 B1

Par ailleurs, de façon avantageuse, pour une installation de chauffage de locaux comprenant plusieurs générateurs de chauffage et une vanne mélangeuse, le procédé de régulation conforme à la présente invention met en œuvre un régulateur proportionnel ou proportionnel et dérivée sensible à une température de référence correspondant à une sommation des trois premiers signaux, qui génère un premier signal de commande, lorsque ladite température de référence est supérieure à la température de départ du fluide, pour imposer un temps d'ouverture de la vanne mélangeuse proportionnel à l'écart entre ces températures, et génère un second signal de commande, lorsque ladite température de référence est inférieure à la température de départ du fluide pour imposer un temps de fermeture de la vanne mélangeuse proportionnel à l'écart entre ces mêmes températures.

La présente invention concerne également un dispositif de régulation d'une installation de chauffage de locaux comprenant plusieurs générateurs de chauffage, ce dispositif comportant de façon connue en soi :

— des sondes de température sensibles respectivement à la température extérieure instantanée, à la température intérieure instantanée et à la température de départ du fluide chauffé,

— des moyens adaptés pour définir une température de base prenant en compte la température extérieure, et

— des moyens adaptés pour définir un signal de correction prenant en compte la température intérieure d'un local, et décaler la température de base à l'aide du signal de correction, le dispositif conforme à la présente invention étant caractérisé par le fait qu'il comprend en outre :

— des moyens d'asservissement aptes à générer un premier signal représentatif d'une température de base proportionnelle à l'écart instantané existant entre une température de consigne et la température extérieure,

— des moyens de correction principale aptes à générer un second signal représentatif d'une correction apportée à la température de base, proportionnelle à l'écart instantané existant entre la température de consigne et la température intérieure,

— des moyens de correction auxiliaire aptes à générer périodiquement un troisième signal représentatif d'une correction auxiliaire proportionnelle à l'intégration, sur une période prédéterminée, de l'écart existant entre la température de consigne et la température intérieure,

— des moyens d'autoadaptation sensibles au troisième signal et aptes à corriger à la fin de chaque période prédéterminée le facteur de proportionnalité entre la température de base et l'écart existant entre la température de consigne et la température extérieure,

— des moyens de référence aptes à générer un quatrième signal représentatif d'une température de référence correspondant à une sommation des trois premiers signaux,

— un régulateur proportionnel-intégral sensible à l'écart existant entre la température de référence et la température de départ du fluide chauffé par les générateurs, et générant un cinquième signal,

— des détecteurs de seuils aptes à détecter le passage du cinquième signal par des seuils prédéterminés successifs correspondant à des commandes respectives de mise en service desdits générateurs.

D'autres caractéristiques du dispositif seront évoqués par la suite.

On notera cependant que, selon une caractéristique avantageuse de l'invention, le dispositif comprend en outre un organe de codage apte à déterminer en fonction d'une programmation horaire et d'une commande de l'utilisateur, des valeurs de températures de consigne différentes, utilisées pour la détermination des températures de référence respectives appliquées au régulateur proportionnel-intégral et au régulateur proportionnel, adaptés respectivement pour déterminer les mises en service desdits générateurs de chauffage et pour commander la vanne mélangeuse.

D'autres caractéristiques et avantages de la présente invention apparaîtront à la lecture de la description détaillée qui va suivre et en regard des dessins annexés donnés à titre d'exemple non limitatif et sur lesquels :

— la figure 1 représente une vue schématique sous forme de blocs fonctionnels d'un dispositif de régulation conforme à l'invention,

— la figure 2 illustre schématiquement une installation de chauffage susceptible d'être équipée d'un dispositif de régulation conforme à l'invention.

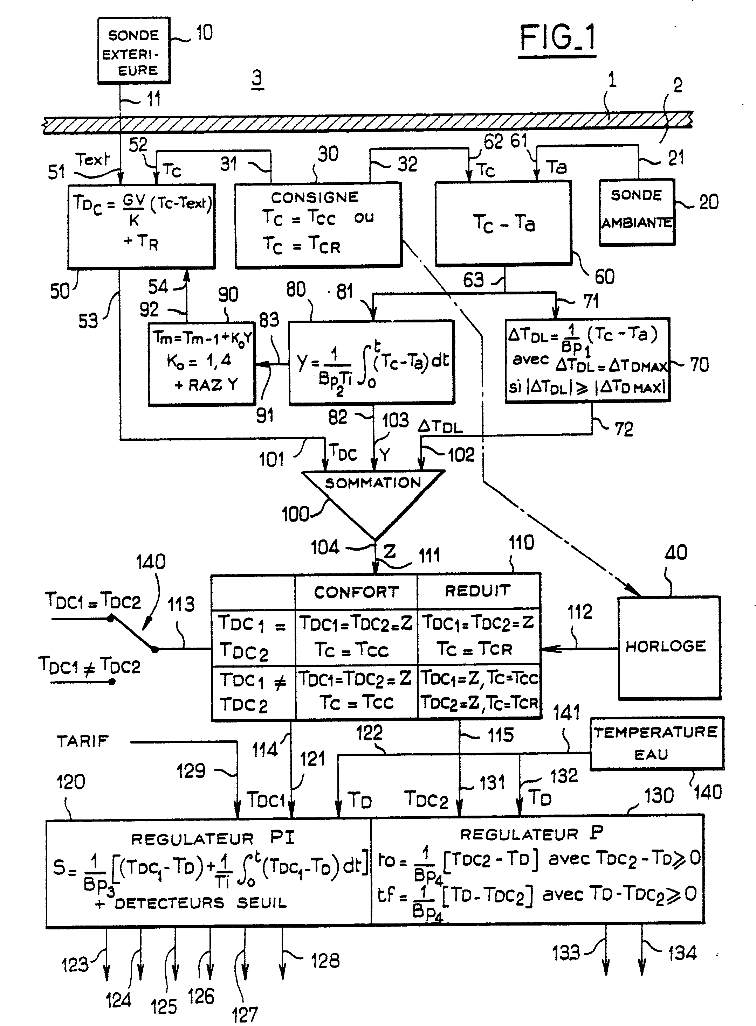

Sur la figure 1 on a représenté schématiquement sous la référence 1 une cloison séparant l'intérieur 2 d'un local et l'extérieur 3.

Une sonde 10 placée à l'extérieur dudit local génère sur sa sortie 11 un signal représentatif de la température extérieure instantanée Text.

De façon similaire, une sonde 20 disposée à l'intérieur 2 du local génère à sa sortie 21 un signal représentatif de la température intérieure instantanée Ta.

De plus, un organe 30 de consigne génère à ses sorties 31 et 32 un signal représentatif d'une température de consigne Tc correspondant à la température souhaitée à l'intérieur dudit local.

Comme cela sera explicité par la suite, la température de consigne Tc définie par l'organe 30 est de préférence susceptible d'être modulée, selon une programmation prédéterminée contrôlée par une horloge 40, entre plusieurs valeurs, telles que par exemple une température de consigne confort Tcc correspondant au temps d'occupation du local, et une température de consigne réduite TcR correspondant au temps d'inoccupation du local.

3

Les signaux générés sur les sorties 11, 21, 31 et 32 des sondes ambiantes 10 et 20 et de l'organe de consigne 30 sont utilisés pour générer un signal Z représentatif d'une température de référence, selon un processus qui va maintenant être décrit.

Pour cela, les signaux présents sur les sorties 11 et 31 de la sonde extérieure 10 et de l'organe de consigne 30, qui représentent respectivement la température extérieure Text et la température de consigne Tc, sont appliqués sur les entrées 51 et 52 d'un ensemble d'asservissement 50 qui génère sur sa sortie 53 un premier signal représentatif d'une température de base $TD_c$ proportionnelle à l'écart instantané existant entre la température de consigne Tc et la température extérieure Text, sur la base de la relation :

$$TD_c = \frac{GV}{K}(Tc - Text) + TR \tag{1}$$

dans laquelle

G = Coefficient de déperdition volumique du local en W/°C $m^3$
V = Volume du local en $m^3$
TR = Température de retour du fluide de chauffage assimilable à une constante égale par exemple à 20
GV/K = Constante égale à

$$\frac{GV}{K} = \frac{k_1 - k_2}{Tc - Tm} \tag{2}$$

où $k_1$ représente la température maximale de $TD_c$ et $k_2$ la température minimale de $TD_c$ dans la bande proportionnelle, Tm représente la température extérieure pour laquelle la puissance de base maximale est requise pour maintenir la température de consigne Tc à l'intérieur des locaux, avec par exemple $k_1 = 90$ et $k_2 = 20$, on obtient :

$$\frac{GV}{K} = \frac{90 - 20}{Tc - Tm}.$$

La relation (1) est déterminée sur la base des relations :

$$P = GV(Tc - Text) \tag{3}$$

où P représente la puissance en Watt et

$$P = k(TD - TR) \tag{4}$$

où

k = Coefficient d'émission en W/°C
TD représente la température de départ du fluide, et
TR représente la température de retour du fluide.

La sortie 53 de l'ensemble d'asservissement 50 est connectée à l'entrée 101 des moyens de référence 100 comportant un organe de sommation à trois entrées.

En parallèle, les signaux générés sur les sorties 21 et 32 de la sonde intérieure 20 et de l'organe de consigne 30, représentatifs respectivement de la température intérieure Ta et de la température de consigne Tc sont appliqués sur les entrées 61 et 62 d'un élément différentiateur 60 qui génère sur sa sortie 63 un signal représentatif de l'écart (Tc — Ta) entre la température de consigne et la température intérieure.

La sortie 63 de l'élément différentiateur 60 est connectée d'une part à l'entrée 71 de moyens de correction principale 70 et d'autre part à l'entrée 81 d'un moyen de correction auxiliaire 80.

Les moyens de correction principale 70 génèrent à leur sortie 72 un second signal représentatif d'une correction ΔTDL proportionnelle à l'écart instantané existant entre la température de consigne Tc et la température intérieure Ta sur la base de la relation :

$$\Delta TDL = \frac{1}{B_{P_1}}(Tc - Ta) \tag{5}$$

dans laquelle $B_{p1}$ représente la bande proportionnelle
avec $\Delta TDL = \Delta TD_{MAX}$
si $|\Delta TDL| \geqslant |\Delta TD_{MAX}|$.

Le signal de correction principale ΔTDL, limité en amplitude, généré sur la sortie 72 est appliqué à l'entrée 102 du sommateur 100 des moyens de référence précités.

Le moyen de correction auxiliaire 80 génère sur sa sortie 82, périodiquement, c'est-à-dire à chaque période Ti, égale par exemple à 24 heures, un troisième signal Y représentatif d'une correction auxiliaire proportionnelle à l'intégration, sur une période prédéterminée Ti de l'écart existant entre la température de consigne Tc et la température intérieure Ta, sur la base de la relation :

$$Y = \frac{1}{B_{p_2} Ti} \int_0^t (\dot{Tc} - Ta) \, dt \qquad (6)$$

dans laquelle

$B_{p2}$ représente la bande proportionnelle, et

Ti représente la période d'intégration.

Le troisième signal Y, généré sur la sortie 82, est appliqué à l'entrée 103 du sommateur 100 incorporé aux moyens de référence précités.

Par ailleurs, des moyens d'autoadaptation 90 reliés par leur entrée 91 à la sortie 83 des moyens de correction auxiliaire 80, sur laquelle est également appliqué le troisième signal Y, corrigent à la fin de chaque période prédéterminée d'intégration Ti le facteur de proportionnalité entre la température de base $TD_c$ et l'écart existant entre la température de consigne Tc et la température extérieure Text.

Plus précisément, comme cela est schématiquement représenté sur la figure 1 les moyens d'autoadaptation 90 sont adaptés pour incrémenter périodiquement la valeur de la température extérieure Tm pour laquelle la température de départ d'eau maximale est imposée (90° par exemple) afin de maintenir la température de consigne à l'intérieur des locaux, ladite incrémentation étant proportionnelle à l'amplitude du signal Y, c'est-à-dire à l'intégration, sur une période prédéterminée Ti de l'écart existant entre la température de consigne Tc et la température intérieure aux locaux Ta.

Pour cela, les moyens d'autoadaptation 90 qui sont reliés par leur sortie 92 à l'entrée 54 de réglage de l'ensemble d'asservissement 50, comprennent des moyens sensibles à la relation :

$$Tm = T_{m-1} + K_0 \, Y \qquad (7)$$

avec $K_0 = 1,4$.

Après prise en compte du facteur de correction, à chaque période d'intégration Ti, la valeur du signal Y mémorisée pour la période d'intégration précédente est remise à zéro.

On remarquera que le réglage de la valeur Tm revient en fait à régler la pente de détermination de la température de base $TD_c$.

Grâce à ce processus d'autoadaptation l'installateur n'a pas à se soucier du réglage de Tm. Celui-ci est opéré automatiquement, de façon optimum, sur l'ensemble de la plage de variation de la température extérieure du lieu considéré, en minimisant la valeur de la puissance de correction moyenne requise.

Le cas échéant, on peut prévoir de corriger la valeur de Tm uniquement lorsque le signal de correction auxiliaire Y dépasse un seuil prédéterminé. Pour cela, il suffit de prévoir un détecteur de seuil approprié au niveau des moyens d'autoadaptation 90.

Dans la pratique, ce processus d'autoadaptation n'a d'intérêt que dans les premiers jours de la mise en service de l'installation de chauffage, lorsque la valeur initiale de TM est très éloignée de la valeur finale à atteindre.

Plus précisément, le facteur GV/K utilisé dans la relation (1), est modulé sur la base de la relation (2), en fonction de la valeur Tm obtenue selon la relation (7).

Les moyens de référence comportant un sommateur 100 génèrent à leur sortie 104 un signal de référence Z correspondant à une sommation des premier, second et troisième signaux $TD_c$, $\Delta TDL$ et Y.

On rappelle que le signal $TD_c$ correspond à la température de base requise, les signaux $\Delta TDL$ et Y correspondant à des signaux de correction qui permettent de moduler la température de base prédéterminée, afin de tenir compte des apports gratuits d'énergie d'une part et des phénomènes inertiels des locaux d'autre part.

Selon le mode de réalisation représenté sur la figure 1, le signal Z représentant la température de référence est appliqué à l'entrée 111 d'un organe de codage 110.

Ce dernier détermine, en fonction d'une programmation horaire appliquée sur son entrée 112 et contrôlée par l'horloge 40, d'une part et d'une commande de l'utilisateur appliquée sur son entrée 113 d'autre part, qui sera précisée par la suite, des valeurs de température de consigne Tcc ou TcR différentes, utilisées pour la détermination des températures de référence $TDc_1$ et $TDc_2$ respectives, générées sur ses sorties 114 et 115.

Ces températures de référence respectives $TDc_1$ et $TDc_2$ générées sur les sorties 114 et 115 sont appliquées respectivement à un régulateur proportionnel-intégral 120 et à un régulateur proportionnel ou proportionnel et dérivée 130 dont les fonctions seront explicitées par la suite.

Selon le mode de réalisation représenté sur la figure 1, la commande de l'utilisateur appliquée sur l'entrée 113 de l'organe de codage 110 est constituée d'un interrupteur 140, adapté pour être basculé entre deux positions.

Dans l'une de ces positions ($TDc_1 = TDc_2$) l'interrupteur 140 commandé par l'utilisateur impose à l'organe de codage 110 la génération de deux températures de référence $TDc_1$ et $TDc_2$ égales, quelle que

soit la température de consigne Tc requise.

Dans la seconde position ($TDc_1$ différent de $TDc_2$) l'interrupteur 140 commandé par l'utilisateur impose à l'organe de codage 110 une détermination de températures de référence $TDc_1$ et $TDc_2$ différentes, lorsqu'une température de consigne réduite TcR est demandée.

Ce processus est résumé dans le tableau représenté dans le cadre référencé 110 sur la figure 1.

Sur celui-ci, on note que :

1. Dans la première position de l'interrupteur $TDc_1 = TDc_2$, pour une température de consigne confort Tcc, les deux températures de référence $TDc_1$ et $TDc_2$ sont égales et correspondent au signal Z généré en sortie de l'organe de référence 100, la détermination de ces températures de référence étant obtenue en prenant Tc = Tcc,

2. Dans la première position de l'interrupteur $TDc_1 = TDc_2$, lorsqu'une température de consigne réduite TcR est imposée, les deux valeurs de référence $TDc_1$ et $TDc_2$ sont égales et correspondent là encore au signal Z émis en sortie des moyens de référence 100, mais en prenant alors Tc = TcR,

3. Dans la seconde position de l'interrupteur 140 ($TDc_1$ différent de $TDc_2$), lorsque la température de consigne confort est requise, les températures de référence $TDc_1$ et $TDc_2$ sont égales au signal Z généré en sortie des moyens de référence 100, en prenant Tc = Tcc,

4. Lorsque l'interrupteur 140 est dans la seconde position ($TDc_1$ différent de $TDc_2$) avec une température de consigne réduite, la première température de référence $TDc_1$ égale le signal Z généré en sortie des moyens de référence 100 en prenant Tc = Tcc (température consigne confort) et la seconde température de référence $TDc_2$ égale le signal généré en sortie des moyens de référence 100 en prenant Tc = TcR (température consigne réduite).

L'utilisation d'un interrupteur de commande 140, qui permet de réduire la température de consigne Tc pour la détermination de l'une seulement des températures de référence permet de diminuer notablement la consommation due à certains des générateurs de chauffage. Cette disposition s'avère particulièrement intéressante dans le cas d'installation de chauffage bi ou multi-énergie.

Le signal représentatif de la température de référence $TDc_1$ présent sur la sortie 114 de l'organe de codage 110 est appliqué sur l'entrée 121 d'un régulateur porportionnel-intégral PI 120. Ce dernier reçoit par ailleurs sur son entrée 122 un signal TD généré à la sortie 141 d'une sonde 140 sensible à la température de départ du fluide de chauffage traversant les générateurs. Le régulateur proportionnel intégral PI 120 est donc sensible à l'écart existant entre la température de référence $TDc_1$ et la température de départ TD du fluide chauffé par les générateurs et génère un cinquième signal S sur la base de la relation :

$$S = \frac{1}{B_{P_3}} \left[ (TDc_1 - TD) + \frac{1}{Ti} \int_0^t (TDc_1 - TD)\, dt \right] \qquad (8)$$

où $B_{p3}$ représente la bande proportionnelle du régulateur.

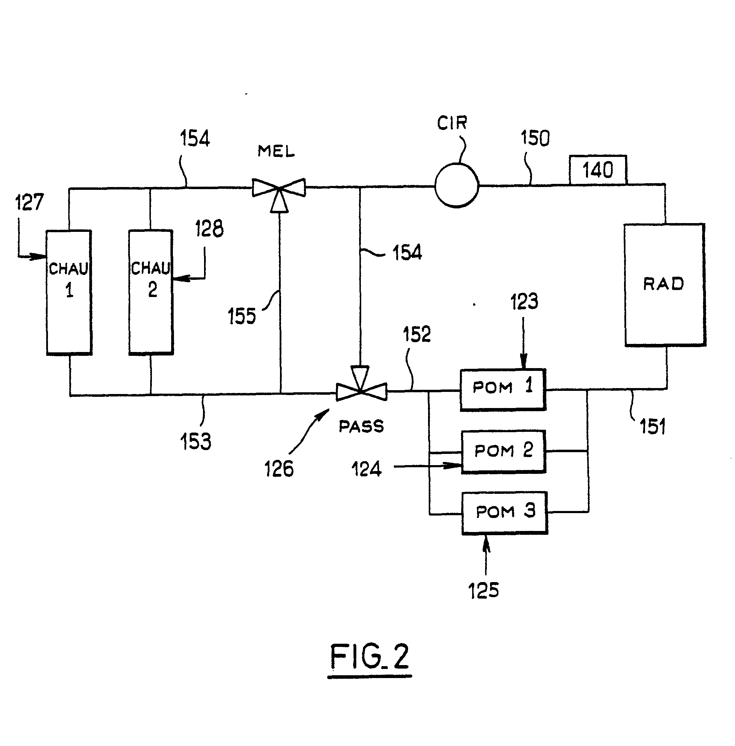

Des détecteurs de seuils (non représentés sur les figures, mais intégrés au régulateur PI 120) détectent le passage du cinquième signal S par des seuils prédéterminés successifs correspondant à des commandes respectives de mise en service des différents générateurs de chauffage. En conséquence, le régulateur PI génère successivement sur ses sorties 123 à 128 des signaux de commande aptes à assurer la mise en service desdits générateurs de chauffage, lors du franchissement des seuils précités par le cinquième signal S. Cette disposition sera explicitée par la suite en regard de la figure 2.

De préférence, comme cela est également illustré sur la figure 1, le régulateur PI reçoit sur son entrée 129 un signal représentatif des périodes tarifaires de l'une au moins des énergies utilisées pour l'alimentation des générateurs de chauffage.

Ces deux dispositions s'avèrent en particulier intéressantes dans le cas d'installations de chauffage comportant des générateurs électriques, la mise en service de ces derniers étant prioritaire, pour les périodes dites de tarif réduit.

Le régulateur proportionnel ou proportionnel et dérivée 130 représenté également sur la figure 1, et qui reçoit sur son entrée 131 la température de référence $TDc_2$ générée à la sortie 115 de l'organe de codage 110, et sur son entrée 132 le signal TD représentatif de la température de départ du fluide généré par la sonde 140, est utilisé pour les installations de chauffage comprenant une vanne mélangeuse.

Le régulateur 130 est adapté pour générer un premier signal de commande lorsque la température de référence $TDc_2$ est supérieure à la température TD de départ du fluide, pour imposer un temps d'ouverture to de la vanne mélangeuse proportionnel à l'écart entre la température de référence $TDc_2$ et la température de départ TD, sur la base de la relation :

$$to = \frac{1}{B_{P_4}} (TDc_2 - TD) \qquad (9)$$

avec $TDc_2 - TD \geqslant 0$

EP 0 148 700 B1

où $B_{p_4}$ représente la bande proportionnelle du régulateur.

Le régulateur proportionnel ou proportionnel et dérivée 130 est par ailleurs adapté pour générer un second signal de commande tf lorsque ladite température de référence $TDc_2$ est inférieure à la température de départ TD du fluide pour imposer un temps de fermeture tf de la vanne mélangeuse proportionnel à l'écart entre la température de départ TD du fluide de chauffage et la température de référence $TDc_2$, sur la base de la relation :

$$Tf = \frac{1}{B_{p_4}} (TD - TDc_2) \qquad (10)$$

avec $TD - TDc_2 \geqslant 0$

Les signaux de commande générés par le régulateur proportionnel ou proportionnel et dérivée 130 pour commander d'une part l'ouverture de la vanne mélangeuse, d'autre part, la fermeture de celle-ci, sont générés respectivement sur les sorties 133 et 134 du régulateur.

Selon une variante de réalisation avantageuse, lorsqu'une température de consigne réduite TcR est requise, cette information peut être prise en compte, en ce qui concerne la sonde extérieure 10, en maintenant un signal Tc sur l'entrée 52 de l'ensemble d'asservissement 50 correspondant à une température de consigne confort, et en augmentant le signal représentatif de la température extérieure Text appliquée sur l'entrée 51 d'une valeur égale à la différence entre la température de consigne confort Tcc et celle de la température de consigne réduite TcR.

On remarquera que outre la possibilité de passage automatique d'une énergie à l'autre en fonction des périodes tarifaires signalées sur l'entrée 129 du régulateur proportionnel-intégral 120, par exemple sur la base d'informations délivrées par le fournisseur en électricité, on peut envisager une possibilité de marche forcée sur une énergie ou sur l'autre, par intervention manuelle, en adaptant en conséquence la génération des signaux sur les sorties 123 à 128 du régulateur proportionnel-intégral 120.

Par ailleurs, la régulation proposée par ce régulateur 120, qui consiste à détecter le franchissement de seuils par le cinquième signal S assure une commande étagée des différents générateurs, ce qui limite de façon optimum la commutation de ceux-ci.

On va maintenant décrire la structure de l'installation de chauffage représentée sur la figure 2.

On distingue sur celle-ci un ensemble de radiateurs RAD susceptible d'être formé de différents éléments séparés branchés en parallèle, mais schématiquement représentés sur la figure 2. Cet ensemble de radiateurs RAD est alimenté par une canalisation 150 sur laquelle est disposée la sonde 140 mesurant la température de départ du fluide, ainsi qu'un circulateur CIR. Le fluide évacué de l'ensemble de radiateurs RAD par une canalisation 151 traverse un ensemble de pompes à chaleur POM 1, POM 2, POM 3, ou des éléments fonctionnellement équivalents, connectés en parallèle. La sortie 152 commune aux générateurs de chauffage POM 1, POM 2 et POM 3 est reliée à une vanne de déviation ou by-pass référencée PASS sur la figure 2. Cette dernière communique d'une part avec un second ensemble de générateurs de chauffage comprenant différents générateurs connectés en parallèle, tels que des chaudières à fuel CHAU 1 et CHAU 2, par l'intermédiaire d'une canalisation 153, et d'autre part, par l'intermédiaire d'une canalisation 154, avec la conduite 150 précitée.

Enfin, une vanne mélangeuse référencée MEL est reliée entre la conduite 154 de départ commune au second ensemble de générateurs de chauffage CHAU 1 et CHAU 2 et le point de liaison des conduites 154 et 150 précitées. La vanne mélangeuse MEL possède de plus une conduite auxiliaire 155 adaptée pour relier en position d'ouverture de la vanne mélangeuse MEL la conduite de départ 150 et la conduite 153.

L'électrovanne de by-pass référencée PASS permet lorsque le premier ensemble générateur de chauffage (POM 1, POM 2 et POM 3) est suffisant pour fournir la puissance de chauffage requise pour obtenir la température de consigne Tc demandée, de diriger le fluide chauffé par ce premier ensemble directement vers les radiateurs RAD, par l'intermédiaire de la conduite 154, sans passer par le second ensemble de générateurs de chauffage, afin de limiter les pertes énergétiques du réseau.

Par contre, on notera que lors de la mise en service de ce second ensemble, il est souhaitable d'assurer une période de balayage des chaudières CHAU 1 et CHAU 2 par l'eau chaude du réseau, avant d'assurer leur mise en service, afin d'assurer un pré-chauffage de ces chaudières pour en limiter la corrosion.

La vanne mélangeuse MEL est bien entendu adaptée pour contrôler, en fonction de sa position la température de départ d'eau.

En liaison avec la figure 1, la régulation de l'installation de chauffage ainsi décrite peut être obtenue en commandant la mise en service des générateurs de chauffage POM 1, POM 2 et POM 3 grâce aux sorties 123, 124 et 125 précitées du régulateur proportionnel-intégral 120, en assurant la commande de l'électrovanne de by-pass PASS grâce à la sortie 126 du régulateur 120, et en assurant la mise en service des chaudières CHAU 1 et CHAU 2 du second ensemble de générateurs de chauffage, respectivement par les sorties 127 et 128 du régulateur 120, l'ouverture de la vanne mélangeuse MEL étant commandée par la sortie 133 du régulateur 130 et la fermeture de cette vanne mélangeuse MEL étant commandée par la sortie 134 du régulateur proportionnel ou proportionnel et dérivée 130.

On peut par exemple envisager que la validation du signal sur la sortie 126 du régulateur PI, qui commande la vanne de by-pass PASS, force cette dernière ainsi que la vanne mélangeuse MEL en

7

position de passage intégral du fluide de chauffage dans le second ensemble de générateurs de chauffage CHAU 1 et CHAU 2. De plus, on peut envisager de n'autoriser la mise en service de la régulation de la vanne mélangeuse, grâce aux sorties 133 et 134 du régulateur P 130 qu'après validation du signal de commande du premier générateur de chauffage du second ensemble CHAU 1 et CHAU 2 sur la sortie 127 du régulateur PI 120.

On peut aussi envisager que la validation du signal sur la sortie 126 du régulateur PI, qui commande la vanne de by-pass PASS force cette dernière en position de passage intégral du fluide dans les canalisations 153 et 155 et autorise la vanne mélangeuse MEL à réguler grâce aux sorties 133 et 134 de régulateur P 130.

On remarquera que lorsque l'installation hydraulique dispose d'une vanne mélangeuse MAL la vanne de by-pass PASS n'est pas nécessaire.

Bien entendu, l'installation et le dispositif de régulation qui viennent d'être décrits sont susceptibles d'être l'objet de nombreuses variantes conformes à l'invention.

**Revendications**

1. Procédé de régulation d'une installation de chauffage de locaux comprenant plusieurs générateurs de chauffage comprenant les étapes connues consistant :

   a) à définir une température de base en prenant en compte la température extérieure momentanée, et

   b) à décaler la température de base à l'aide d'un signal de correction prenant en compte la température intérieure d'un local, caractérisé par le fait qu'il comprend les étapes consistant à :

   i) à générer en permanence (50) un premier signal ($TD_c$) représentatif d'une température de base proportionnelle à l'écart existant entre une température de consigne (Tc) et la température extérieure instantanée (Text),

   ii) à générer en permanence (70) un second signal représentatif d'une correction ($\Delta TDL$) apportée à la température de base, proportionnelle à l'écart existant entre la température de consigne (Tc) et la température intérieure instantanée (Ta) des locaux,

   iii) à générer périodiquement (80) un troisième signal représentatif d'une correction auxiliaire (Y) proportionnelle à l'intégration, sur une période de temps prédéterminée (Ti), des écarts existants entre la température de consigne (Tc) et la température intérieure (Ta),

   iv) à corriger (90) le facteur de proportionnalité entre la température de base ($TD_c$) et l'écart existant entre la température de consigne (Tc) et la température extérieure (Text), sur la base du troisième signal (Y), à la fin de chaque période prédéterminée (Ti),

   v) à générer (100) en permanence un quatrième signal (Z) représentatif d'une température de référence correspondant à une sommation des trois premiers signaux ($TD_c$, $\Delta TDL$, Y).

   vi) à déterminer un cinquième signal (S) dans un régulateur (120) du type proportionnel-intégral sensible à l'écart existant entre la température de référence ($TDc_1$) et la température de départ (TD) du fluide chauffé par les générateurs, et

   vii) à détecter le passage du cinquième signal (S) par des seuils prédéterminés successifs correspondant à des commandes respectives de mise en service desdits générateurs (POM1, POM2, POM3, CHAU1, CHAU2).

2. Procédé de régulation selon la revendication 1, caractérisé par le fait que la correction ($\Delta TDL$) apportée à la température de base ($TD_c$) et déterminée sous forme du second signal à l'étape ii) est limitée à un maximum ($\Delta TDmax$).

3. Procédé de régulation selon l'une des revendications 1 ou 2, caractérisé par le fait que l'étape iv) consiste à incrémenter périodiquement la valeur de la température extérieure (Tm) pour laquelle la température de départ d'eau maximale est imposée afin de maintenir la température de consigne (Tc) à l'intérieur des locaux, proportionnellement à ladite intégration, sur une période prédéterminée (Ti), de l'écart existant entre la température de consigne (Tc) et la température (Ta) intérieure aux locaux.

4. Procédé de régulation selon l'une des revendications 1 à 3, caractérisé par le fait que la température de consigne (Tc) est modulée automatiquement en fonction d'une programmation horaire (40).

5. Procédé de régulation d'une installation de chauffage de locaux comprenant plusieurs générateurs de chauffage selon l'une des revendications 1 à 4, et du type comprenant une vanne mélangeuse (MEL), caractérisé par le fait qu'un régulateur proportionnel ou proportionnel et dérivée (P, 130) sensible à une température de référence ($TDc_2$) correspondant à une sommation des trois premiers signaux génère un premier signal de commande (to), lorsque ladite température de référence ($TDc_2$) est supérieure à la température de départ (TD) du fluide, pour imposer un temps d'ouverture de la vanne mélangeuse (MEL) proportionnel à l'écart entre ces températures, et génère un second signal de commande (tf), lorsque ladite température de référence ($TDc_2$) est inférieure à la température de départ (TD) du fluide pour imposer un temps de fermeture de la vanne mélangeuse (MEL) proportionnel à l'écart entre ces mêmes températures.

6. Dispositif de régulation d'une installation de chauffage de locaux comprenant plusieurs générateurs de chauffage (POM1, POM2, POM3 ; CHAU1, CHAU2), comprenant de façon connue en soi des sondes de température (10, 20, 140) sensibles respectivement à la température extérieure instantanée (Text), à la température intérieure instantanée (Ta) et à la température de départ du fluide (TD) chauffé par les générateurs, ainsi que des moyens adaptés pour définir une température de base prenant en compte la température extérieure et des moyens adaptés pour définir un signal de correction prenant en compte la température intérieure d'un local, et décaler la température de base à l'aide du signal de correction, caractérisé par le fait qu'il comprend :

— des moyens d'asservissement (50) aptes à générer un premier signal représentatif d'une température de base ($TD_c$) proportionnelle à l'écart instantané existant entre une température de consigne (Tc) et la température extérieure (Text),

— des moyens de correction principale (70) aptes à générer un second signal représentatif d'une correction ($\Delta$TDL) apportée à la température de base ($TD_c$), proportionnelle à l'écart instantané existant entre la température de consigne (Tc) et la température intérieure (Ta),

— des moyens de correction auxiliaire (80) aptes à générer périodiquement un troisième signal représentatif d'une correction auxiliaire (Y) proportionnelle à l'intégration, sur une période prédéterminée (Ti), de l'écart existant entre la température de consigne (Tc) et la température intérieure (Ta),

— des moyens d'autoadaptation (90) sensibles au troisième signal (Y) et aptes à corriger à la fin de chaque période prédéterminée (Ti) le facteur de proportionnalité entre la température de base ($TD_c$) et l'écart existant entre la température de consigne (Tc) et la température extérieure (Text),

— des moyens de référence (100) aptes à générer un quatrième signal (Z) représentatif d'une température de référence correspondant à une sommation des trois premiers signaux,

— un régulateur proportionnel-intégral (120) sensible à l'écart existant entre la température de référence ($TDc_1$) et la température de départ (TD) du fluide chauffé par les générateurs, et générant un cinquième signal (S),

— des détecteurs de seuils aptes à détecter le passage du cinquième signal (S) par des seuils prédéterminés successifs correspondant à des commandes respectives de mise en service desdits générateurs (POM1, POM2, POM3 ; CHAU1, CHAU2).

7. Dispositif selon la revendication 6, caractérisé par le fait que les moyens de correction auxiliaire (70) comprennent des moyens écrêteurs aptes à limiter l'amplitude du second signal ($\Delta$TDL) à un maximum ($\Delta$TDmax).

8. Dispositif selon l'une des revendications 6 ou 7, caractérisé par le fait que les moyens d'auto-adaptation (90) comprennent des moyens d'incrémentation aptes à incrémenter périodiquement la valeur de la température extérieure (Tm) pour laquelle la température de départ d'eau maximale est imposée afin de maintenir la température de consigne (Tc) à l'intérieur des locaux, proportionnellement à ladite intégration, sur une période prédéterminée (Ti), de l'écart existant entre la température de consigne (Tc), et la température intérieure (Ta) aux locaux.

9. Dispositif selon l'une des revendications 6 à 8, caractérisé par le fait qu'il comprend en outre une horloge (40) apte à moduler la température de consigne (Tc) selon une programmation prédéterminée.

10. Dispositif de régulation selon l'une des revendications 6 à 9, du type comprenant une vanne mélangeuse (MEL), caractérisé par le fait qu'il comprend en outre un régulateur proportionnel ou proportionnel et dérivée (P,130) sensible à une température de référence ($TDc_2$) correspondant au quatrième signal généré par les moyens de référence (100) et adapté pour générer un premier signal de commande ($t_0$) lorsque ladite température de référence ($TDc_2$) est supérieure à la température de départ (TD) du fluide pour imposer un temps d'ouverture de la vanne mélangeuse (MEL) proportionnel à l'écart entre ces températures et générer un second signal de commande (tf), lorsque ladite température de référence ($TDc_2$) est inférieure à la température de départ (TD) du fluide pour imposer un temps de fermeture de la vanne mélangeuse (MEL) proportionnel à l'écart entre ces mêmes températures.

11. Dispositif de régulation selon l'une des revendications précédentes prises en combinaison avec les revendications 6 et 10, caractérisé par le fait qu'il comprend en outre un organe de codage (110) apte à déterminer en fonction d'une programmation horaire (40) et d'une commande de l'utilisateur (140), des valeurs de températures de consigne (Tcc, TcR) différentes utilisées pour la détermination des températures de référence respectives appliquées au régulateur proportionnel-intégral (120) et au régulateur proportionnel (130).

## Claims

1. A method for regulating a heating installation in premises including a plurality of heating generators, wherein the method comprises the known steps of :

a) defining a base temperature taking into account the instantaneous outside temperature, and

b) shifting the base temperature with a correction signal taking into account the inside temperature of a premise, characterised by the fact that the method comprises the steps of :

i) permanently generating (50) a first signal ($TD_c$) representative of a base temperature proportional to the difference existing between a set temperature (Tc) and the instantaneous outside temperature (Text) ;

9

ii) permanently generating (70) a second signal representative of a correction (ΔTDL) applied to the base temperature, and proportional to the base temperature, and proportional to the base temperature, and proportional to the difference between the set temperature (Tc) and the instantaneous inside temperature (Ta) of the premises ;

iii) periodically generating (80) a third signal representative of an auxiliary correction (Y) proportional to the integration over a predetermined period of time (Ti) of the differences existing between the set temperature (Tc) and the inside temperature (Ta),

iv) correcting (90) the factor of proportionality between the base temperature (TDc) and the difference existing between the set temperature (Tc) and the outside temperature (Text) on the basis of the third signal (Y) at the end of each predetermined period (Ti) ;

v) permanently generating (100) a fourth signal (Z) representative of a reference temperature corresponding to summing the first three signals (TD$_c$, ΔTDL, Y),

vi) determining a fifth signal (S) in a proportional-integral type regulator (120) sensitive to the difference existing between the reference temperature (TDc$_1$) and the departure temperature (TD) of the heated fluid as it leaves the heat generator ; and

vii) detecting the passage of the fifth signal (S) through successive predetermined thresholds corresponding to respective commands for putting the said generators into service (POM1, POM2, POM3, CHAU1, CHAU2).

2. A regulation method according to claim 1, characterised in that the correction (ΔTDL) applied to the base temperature (TDc) and determined in the form of the second signal at step ii) is limited to a maximum (ΔTDmax).

3. A regulation method according to one of claims 1 or 2, characterised in that step iv) consists in periodically incrementing a temperature value (Tm) which is representative of the outside temperature which corresponds to the set temperature (Tc) being maintained inside the premises with the heating fluid at its maximum allowable departure temperature, said increment being proportional to the said integration over a predetermined period (Ti) of the difference existing between the set temperature (Tc) and the inside temperature (Ti) of the premises.

4. A regulation method according to one of claims 1 to 3 characterised in that the set temperature (Tc) is automatically modulated as a function of a time program (40).

5. A method for regulating a heating installation in premises including a plurality of heating generators and according to any one of claims 1 to 4, the heating installation being of the type which includes a mixing valve (MEL) characterised in that a proportional or a proportional and differential regulator (P, 130) which is sensitive to a reference temperature (TDc$_2$) corresponding to a sum of the three first signals generates a first control signal (to) when the said reference temperature (TDc$_2$) is greater than the departure temperature (TD) of the fluid to cause the mixer valve (MEL) to open for a period of time proportional to the difference between said temperatures, and which generates a second control signal (Tf) when the said reference temperature (TDc$_2$) is less than the departure temperature (TD) of the fluid to cause the mixer valve (MEL) to close for a period of time which is proportional to the difference between the said temperatures.

6. Apparatus for regulating a heating installation in premises including a plurality of heating generators (POM1, POM2, POM3, CHAU1, CHAU2) and comprising in a manner known in itself temperature probes (10, 20, 140) respectively sensitive to the instantaneous outside temperature (Text), to the instantaneous inside temperature (Ta), and to the departure temperature of the fluid (TD) as heated by the heating generators, as well as means adapted to define a base temperature taking into account the outside temperature and means adapted to define a correction signal taking into account the inside temperature of a premise and to shift the base temperature with the correction signal, characterised by the fact that it comprises :

— servo control means (50) suitable for generating a first signal representative of a base temperature (TDc) proportional to the instantaneous difference between a set temperature (Tc) and the outside temperature (Text) ;

— main correction means (70) suitable for generating a second signal representative of a correction (ΔTDL) to be applied to the base temperature (TDc) and proportional to the instantaneous difference between the set temperature (Tc) and the inside temperature (Ta) ;

— auxiliary correction means (80) suitable for periodically generating a third signal representative of an auxiliary correction (Y) proportional to the integration over a predetermined period (Ti) of the difference between the set temperature (Tc) and the inside temperature (Ta) ;

— self-adaptation means (90) sensitive to the third signal (Y) and suitable, at the end of each predetermined period (Ti), for correcting the factor of proportionality between the base temperature (TDc) and the difference between the set temperature (Tc) and the outside temperature (Text) ;

— reference means (100) suitable for generating a fourth signal (Z) representative of a reference temperature corresponding to summing the first three signals ;

— A proportional-integral regulator (120) sensitive to the difference between the reference temperature (TD$_{c1}$) and the departure temperature (TD) of the fluid heated by the heating generators and generating a fifth signal (S) ; and

— threshold detectors suitable for detecting the passage of the fifth signal (S) through successive predetermined thresholds corresponding to controls for bringing respective ones of the heating generators (POM1, POM2, POM3 ; CHAU1, CHAU2) into service.

7. Apparatus according to claim 6, characterised in that the auxiliary correction means (70) comprise peak clipping means suitable for limiting the amplitude of the second signal ($\Delta$TDL) to a maximum value ($\Delta$TDmax).

8. Apparatus according to one of claims 6 or 7, characterised in that the self-adaptation means (90) comprise incrementation means suitable for periodically incrementing a temperature value (Tm) which is representative of that outside temperature which correspond to the set temperature (Tc) being maintained inside the premises with the heating fluid at its maximum allowable departure temperature, said increment being proportional to the said integration over a predetermined period (Ti) of the difference between the set temperature (Tc) and the inside temperature (Ta) of the premises.

9. Apparatus according to one of claims 6 to 8, characterised in that it comprises moreover a clock (40) suitable for modulating the set temperature (Tc) in accordance with a predetermined program.

10. Apparatus according to one of claims 6 to 9, of the type comprising a mixer valve (MEL), characterised in that it further includes a proportional or a proportional and differential regulator (P, 130) sensitive to a reference temperature ($TDc_2$) corresponding to the fourth signal generated by the reference means (100) and adapted to generate a first control signal (to) when the said reference temperature ($TDc_2$) is greater than the departure temperature (TD) of the fluid to cause the mixer valve (MEL) to open for a period of time proportional to the difference between said temperatures, and to generate a second control signal (tf) when the said reference temperature ($TDc_2$) is less than the departure temperature (TD) of the fluid to close the mixer valve (MEL) for a period of time which is proportional to the difference between said temperatures.

11. Apparatus according to one of the previous claims taken into combination with claims 6 and 10, characterised in that it further includes a coding unit (110) suitable for determining different set temperature values (Tcc, TcR) as a function of a time program (40) and a user control (140), said different set temperature values being used to determine respective reference temperatures for application to the proportional-integral regulator (120) and to the proportional regulator (130).


## Patentansprüche

1. Verfahren für die Regelung einer mehrere Heizquellen aufweisenden Raumheizungsanlage, welches die folgenden bekannten Schritte umfaßt :

a) Bestimmung einer Basistemperatur unter Berücksichtigung der augenblicklichen Außentemperatur und

b) Verschiebung der Basistemperatur mit Hilfe eines die Innentemperatur eines Raums berücksichtigenden Korrektursignals, dadurch gekennzeichnet, daß es die folgenden Schritte umfaßt :

i) permanente Erzeugung (50) eines eine dem zwischen einer Solltemperatur (Tc) und der augenblicklichen Außentemperatur (Text) vorhandenen Abstand proportionale Basis-temperatur repräsentierenden ersten Signals ($TD_c$),

ii) permanente Erzeugung (70) eines eine in die Bais-temperatur eingebrachte, dem zwischen der Solltemperatur (Tc) und der augenblicklichen Innentemperatur (Ta) der Räume vorhandenen Abstand proportionale Korrektur ($\Delta$TDL) repräsentierenden zweiten Signals,

iii) periodische Erzeugung (80) eines eine der Integration der während einer vorbestimmten Zeitspanne (Ti) zwischen der Solltemperatur (Tc) und der Innertemperatur (Ta) vorhandenen Abstände proportionale Hilfskorrektur (Y) repräsentierenden dritten Signals,

iv) Korrektur (90) des Proportionalitätsfaktors zwischen der Basistemperatur ($TD_c$) und dem zwischen der Soll-temperatur (Tc) und der Außentemperatur (Text) vorhandenen Abstand auf der Basis des dritten Signals (Y) am Ende jeder vorbestimmten Zeitspanne (Ti),

v) permanente Erzeugung (100) eines eine einer Summierung der drei ersten Signale ($TD_c$, $\Delta$TDL, Y) entsprechenden Bezugstemperatur repräsentierenden vierten Signals (Z),

vi) Bestimmung eines fünften Signals (S) in einem auf den zwischen der Bezugstemperatur ($TD_{c1}$) und der Ausgangstemperatur des von den Heizquellen erwärmten Fluids vorhandenen Abstand ansprechenden Proportional-Integral-Regler (120), und

vii) Erfassung des Durchgangs des fünften Signals (S) durch Befehlen zur Ingangsetzung jeweiliger Heizquellen (POM1, POM2, POM3, CHAU1, CHAU2) entsprechende, aufeinander folgende vorbestimmte Schwellenwerte.

2. Regelverfahren nach Anspruch 1, dadurch gekennzeichnet, daß die in die Basistemperatur ($TD_c$) eingebrachte und im Schritt ii) durch das zweite Signal bestimmte Korrektur ($\Delta$TDL) auf einen Höchstwert ($\Delta$TDmax) begrenzt wird.

3. Regelverfahren nach einem der Ansprüche 1 und 2, dadurch gekennzeichnet, daß der Schritt iv) darin besteht, daß man den Wert der Außentemperatur (Tm), durch welchen die maximale Ausgangstemperatur des Wassers bestimmt ist, um die Solltemperatur (Tc) im Inneren der Räume zu erhalten, periodisch proportional der genannten Integration des zwischen der Solltemperatur (Tc) und der Temperatur (Ta) im Inneren der Räume vorhandenen Abstands über eine vorbestimmte Zeitspanne (Ti) schrittweise erhöht.

4. Regelverfahren nach einem der Ansprüche 1 bis 3, dadurch gekennzeichnet, daß die Solltemperatur (Tc) in Funktion einer Stundenprogrammierung (40) automatisch geändert wird.

5. Verfahren für die Regelung einer mehrere Heizquellen aufweisenden Raumheizungsanlage nach einem der Ansprüche 1 bis 4 unter Verwendung eines Mischventils (MEL), dadurch gekennzeichnet, daß ein auf eine einer Summierung der drei ersten Signale entsprechende Bezugstemperatur ($TDc_2$) ansprechender Proportional- oder Proportional- und Differentialregler ein erstes Befehlssignal (to) erzeugt, wenn die Bezugstemperatur ($TDc_2$) höher ist als die Ausgangstemperatur (TD) des Fluids, um das Mischventil (MEL) über eine dem Abstand zwischen diesen Temperaturen proportionale Zeitspanne aufzusteuern, und ein zweites Befehlssignal (tf) erzeugt, wenn die Bezugstemperatur ($TDc_2$) niedriger ist als die Ausgangstemperatur (TD) des Fluids, um das Mischventil (MEL) über eine dem Abstand zwischen den genannten Temperaturen proportionale Zeitspanne zuzusteuern.

6. Vorrichtung für die Regelung einer mehrere Heizquellen (POM1, POM2, POM3, CHAU1, CHAU2) aufweisenden Raumheizuungsanlage, welche in an sich bekannter Weise auf die augenblickliche Innentemperatur (Ta) bzw. auf die Ausgangstemperatur (TD) des von den Heizquellen erwärmten Fluids ansprechende Temperaturfühler (10, 20, 140), eine Einrichtung zum Bestimmen einer Basistemperatur unter Berücksichtigung der Außentemperatur sowie Einrichtungen zum Bestimmen eines Korrektorsignals unter Berücksichtigung der Innentemperatur eines Raums und zum Verschieben der Basistemperatur mit Hilfe des Korrektursignals aufweist, dadurch gekennzeichnet, daß sie die folgenden Einrichtungen aufweist :

— eine Steuereinrichtung (50) zum Erzeugen eines eine dem zwischen einer Solltemperatur (Tc) und der Außentemperatur (Text) vorhandenen augenblicklichen Abstand proportionale Basistemperatur ($TD_c$) repräsentierenden ersten Signals,

— eine Hauptkorrektureinrichtung (70) zum Erzeugen eines eine in die Basistemperatur ($TD_c$) einzubringende, dem zwischen der Solltemperatur (Tc) und der Innentemperatur (Ta) vorhandenen augenblicklichen Abstand proportionale Korrektur (ΔTDL) repräsentierenden zweiten Signals,

— eine Hilfskorrektureinrichtung (80) zum periodischen Erzeugen eines eine der Integration des zwischen der Solltemperatur (Tc) und der Innentemperatur (Ta) über eine vorbestimmte Zeitspanne (Ti) proportionale Hilfskorrektur (Y) repräsentierenden dritten Signals,

— eine auf das dritte Signal (Y) ansprechende Selbstanpassungseinrichtung (90) zum Korrigieren des Proportionalitätsfaktors zwischen der Basistemperatur (TDc) und dem zwischen der Solltemperatur (Tc) und der Außentemperatur (Text) vorhandenen Abstand am Ende jeder vorbestimmten Zeitspanne (Ti),

— eine Bezugseinrichtung (100) zum Erzeugen eines eine einer Summierung der drei ersten Signale entsprechenden Bezugstemperatur repräsentierenden vierten Signals (Z),

— einen auf den zwischen der Bezugstemperatur ($TDc_1$) und der Ausgangstemperatur (TD) des von den Heizquellen erwärmten Fluids vorhandenen Abstand ansprechenden und ein fünftes Signal (S) erzeugenden Proportional-Integral-Regler (120), und

— auf den Durchgang des fünften Signals (S) durch aufeinander folgende, Befehlssignalen zum Ingangsetzen jeweiliger Heizquellen (POM1, POM2, POM3 ; CHAU1, CHAU2) entsprechende Schwellenwerte ansprechende Schwellenwertsensoren.

7. Vorrichtung nach Anspruch 6, dadurch gekennzeichnet, daß die Hilfskorrektureinrichtung (70) eine Begrenzungseinrichtung zum Begrenzen der Amplitude des zweiten Signals (ΔTDL) auf einen Höchstwert (ΔTDmax) aufweist.

8. Vorrichtung nach einem der Ansprüche 6 und 7, dadurch gekennzeichnet, daß die Selbstanpassungseinrichtung (90) eine Schrittsteigerungseinrichtung aufweist, mittels welcher der Wert der Außentemperatur (Tm), durch welchen die maximale Ausgangstemperatur des Wassers bestimmbar ist, um die Solltemperatur (Tc) im Inneren der Räume aufrechtzuerhalten, proportional der Integration des zwischen der Solltemperatur (Tc) und der Innentemperatur (Ta) der Räume vorhandenen Abstands periodisch schrittweise steigerbar ist.

9. Vorrichtung nach einem der Ansprüche 6 bis 8, dadurch gekennzeichnet, daß sie ferner eine Uhr (40) aufweist, mittels welcher die Solltemperatur (Tc) nach einer vorbestimmten Programmierung veränderbar ist.

10. Regelvorrichtung nach einem der Ansprüche 6 bis 9, mit einem Mischventil (MEL), dadurch gekennzeichnet, daß sie ferner einen auf eine dem durch die Bezugseinrichtung (100) erzeugten vierten Signal entsprechende Bezugstemperatur ($TDc_2$) ansprechenden Proportional- oder Proportional- und Differentialregler (P, 130) aufweist, mittels dessen ein erstes Befehlssignal ($t_0$) erzeugbar ist, wenn die Bezugstemperatur ($TDc_2$) höher ist als die Ausgangstemperatur (TD) des Fluids, um das Mischventil (MEL) über eine dem Abstand zwischen diesen Temperaturen proportionale Zeitspanne aufzusteuern, und mittels dessen ein zweites Befehlssignal (tf) erzeugbar ist, wenn die Bezugstemperatur ($TDc_2$) niedriger ist als die Ausgangstemperatur (TD) des Fluids, um das Mischventil (MEL) über eine dem Abstand zwischen den genannten Temperaturen proportionale Zeitspanne zuzusteuern.

11. Regelvorrichtung nach einem der vorstehenden Ansprüche in Verbindung mit den Ansprüchen 6 und 10, dadurch gekennzeichnet, daß sie ferner eine Codiereinrichtung (110) aufweist, mittels welcher verschiedene Werte von zur Bestimmung von an den Proportional-Integralregler (120) bzw. an den Proportionalregler (130) anzulegenden Bezugstemperaturen verwendeten Solltemperaturen (Tcc, TcR) in Abhängigkeit von einer Stundenprogrammierung (40) und einer Bedienung durch einen Benutzer (140) bestimmbar sind.

# FIG.1

SONDE EXTERI-EURE — 10

11

51  Text  52  $T_C$  31  30  32  62 61  $T_C$  $T_a$  21

50
$$T_{D_C} = \frac{GV}{K}(T_c - T_{ext}) + T_R$$

CONSIGNE
$T_C = T_{CC}$ ou
$T_C = T_{CR}$

$T_C - T_a$

SONDE AMBIANTE — 20

54  92  90
$$T_m = T_{m-1} + K_0 Y$$
$$K_0 = 1,4$$
$$+ RAZ\ Y$$

83  80  81
$$Y = \frac{1}{Bp_2 Ti} \int_0^t (T_c - T_a)\,dt$$

71
$$\Delta T_{DL} = \frac{1}{Bp_1}(T_c - T_a)$$
avec $\Delta T_{DL} = \Delta T_{DMAX}$
si $|\Delta T_{DL}| \geqslant |\Delta T_{DMAX}|$

70

91  82  103  $\Delta T_{DL}$  72

101  $T_{DC}$  Y  102

SOMMATION

100

104  Z

140  113

$T_{DC1} = T_{DC2}$

$T_{DC1} \neq T_{DC2}$

| $T_{DC_1} =$ $T_{DC_2}$ | CONFORT | REDUIT |
|---|---|---|
| $T_{DC_1} =$ $T_{DC_2}$ | $T_{DC1} = T_{DC2} = Z$ $T_c = T_{cc}$ | $T_{DC1} = T_{DC2} = Z$ $T_c = T_{CR}$ |
| $T_{DC_1} \neq$ $T_{DC_2}$ | $T_{DC1} = T_{DC2} = Z$ $T_c = T_{cc}$ | $T_{DC1} = Z, T_c = T_{cc}$ $T_{DC2} = Z, T_c = T_{CR}$ |

111  110

112

40

HORLOGE

141

TEMPERATURE EAU

TARIF

129  120

114  121  122  115  131  132  130  140

$T_{DC1}$  $T_D$  $T_{DC2}$  $T_D$

REGULATEUR PI
$$S = \frac{1}{Bp_3}\left[(T_{DC_1} - T_D) + \frac{1}{Ti}\int_0^t (T_{DC_1} - T_D)\,dt\right]$$
$+$ DETECTEURS SEUIL

REGULATEUR P
$$t_o = \frac{1}{Bp_4}[T_{DC2} - T_D]\ \text{avec}\ T_{DC_2} - T_D \geqslant 0$$
$$t_f = \frac{1}{Bp_4}[T_D - T_{DC2}]\ \text{avec}\ T_D - T_{DC_2} \geqslant 0$$

123  128

124  125  126  127

133  134

FIG. 2